Europäisches Patentamt

European Patent Office

Office européen des brevets

(19)

(11) Veröffentlichungsnummer: **0 329 983**
**A2**

(12) **EUROPÄISCHE PATENTANMELDUNG**

(21) Anmeldenummer: 89101685.9

(51) Int. Cl.⁴: **B23Q 11/08 , B23Q 1/06**

(22) Anmeldetag: 01.02.89

(30) Priorität: 25.02.88 DE 3805844

(43) Veröffentlichungstag der Anmeldung:
30.08.89 Patentblatt 89/35

(84) Benannte Vertragsstaaten:
CH DE ES FR GB IT LI SE

(71) Anmelder: CHIRON-WERKE GMBH & CO. KG
Talstrasse 23
D-7200 Tuttlingen(DE)

(72) Erfinder: Winkler, Hans-Henning, Dr.
Brunnentalstrasse 88
D-7200 Tuttlingen(DE)
Erfinder: Rütschle, Eugen
Schönenbergstrasse 20
D-7202 Mühlheim(DE)

(74) Vertreter: Witte, Alexander, Dr.-Ing.
Witte, Weller & Hilgenfeldt Patent- und
Rechtsanwälte Augustenstrasse 7
D-7000 Stuttgart 1(DE)

(54) **Werkzeugmaschine.**

(57) Eine Werkzeugmaschine weist einen Werkstücktisch (11) auf, bei dem ein erster Bereich als Bearbeitungsseite (18) erste Werkstücke (14a bis 14c) zu Bearbeiten mittels eines Werkzeuges (16) der Werkzeugmaschine (10) trägt und bei dem ein zweiter Bereich als Bestückungsseite (19) während des Bearbeitens der ersten Werkstücke (14a bis 14c) mit zweiten Werkstücken (14d bis 14f) bestückbar ist. Die Bereiche sind durch Lageveränderung eines Spindelstocks (15) bzw. des Werkstücktischs (11) vertauschbar. Zwischen den Bereichen ist eine Spritzschutzwand (17) angeordnet, die um eine parallel zur Oberfläche des Werkstücktisches (11) verlaufende erste Schwenkachse (20) selbsttätig schwenkbar ist. Die Spritzschutzwand (17) unterteilt den von den Bereichen definierten Arbeitsraum (21, 22) für den Spindelstock (15) bzw. einen Benutzer asymmetrisch, derart, daß auf der jeweiligen Bearbeitungsseite (13) ein größerer Arbeitsraum (21) vorhanden ist als auf der jeweiligen Bestückungsseite (19).

Um diese Anordnung auch für Langbett-Werkzeugmaschinen einsetzbar zu machen und um eine mechanisch einfache selbsttätige Verschwenkung der Spritzschutzwand (17) zu erreichen, ist die

Spritzschutzwand (17) mittels eines Mitnehmers umklappbar, der am Spindelstock (15) angebracht ist. Bei einer Relativbewegung von Spindelstock (15) und Werkstücktisch (11) in Richtung einer Längsachse des Werkstücktisches (11) greift der Mitnehmer an einer Kippanordnung der Spritzschutzwand (17) an.

Fig.1

# Werkzeugmaschine

Die Erfindung betrifft eine Werkzeugmaschine mit einem Werkstücktisch, bei dem ein erster Bereich als Bearbeitungsseite erste Werkstücke zum Bearbeiten mittels eines Werkzeuges der Werkzeugmaschine trägt und bei dem ein zweiter Bereich als Bestückungsseite während des Bearbeitens der ersten Werkstücke mit zweiten Werkstücken bestückbar ist, wobei die Bereiche durch Lageveränderung des Werkstücktisches bzw. eines Spindelstocks der Werkzeugmaschine vertauschbar sind, ferner zwischen den Bereichen eine um eine parallel zur Oberfläche des Werkstücktisches verlaufende erste Schwenkachse selbsttätig schwenkbare Spritzschutzwand angeordnet ist, die den von den Bereichen definierten Arbeitsraum für einen bzw. den Spindelstock der Werkzeugmaschine bzw. einen Benutzer asymmetrisch unterteilt, derart, daß auf der jeweiligen Bearbeitungsseite ein größerer Arbeitsraum vorhanden ist als auf der jeweiligen Bestückungsseite.

Eine Werkzeugmaschine der vorstehend genannten Art ist aus der DE-PS 35 33 089 bekannt.

Bei der bekannten Werkzeugmaschine ist der Spindelstock vertikalachsig angeordnet und der Werkstücktisch ist um eine zur Spindelachse parallele vertikale Achse drehbar. Abgesehen von den während der Bearbeitung der Werkstücke erforderlichen Bewegungen in der Horizontalebene ist der Spindelstock im Verhältnis zum Werkstücktisch nicht verfahrbar, d.h., daß der Spindelstock, vom Benutzer der Werkzeugmaschine aus gesehen, stets hinter dem Werkstücktisch angeordnet ist, während der Benutzer von der Vorderseite des Werkstücktisches her bearbeitete Werkstücke auf der Bestückungsseite demontiert und alsdann unbearbeitete Werkstückrohlinge montiert. Dies geschieht, während auf der Bearbeitungsseite die Werkstücke mittels Werkzeugen, die nacheinander in die Spindel des Spindelstocks eingespannt werden, bearbeitet werden. Nach Abschluß der Bearbeitung wird der Werkstücktisch um 180° gedreht, so daß der zuvor auf der Bearbeitungsseite befindliche Bereich des Werkstücktisches nunmehr auf der Bestückungsseite angeordnet ist und umgekehrt.

Bei der bekannten Werkzeugmaschine wird bereits der Tatsache Rechnung getragen, daß auf der Bearbeitungsseite ein größerer Arbeitsraum benötigt wird als auf der Bestückungsseite, weil der Spindelstock allseits über die Spindelachse auslädt und daher mit seiner Außenkontur in den Bereich oberhalb der Hälfte des Werkstücktisches gerät, der auf der Bestückungsseite angeordnet ist, wenn sich das Werkzeug der Tischmitte nähert. Bei der bekannten Werkzeugmaschine sind zwei Spritzschutzwände vorgesehen, die um parallele Achsen verschwenkbar sind, wobei die Achsen symmetrisch im Abstand von der vertikalen Drehachse des Werkstücktisches verlaufen. Durch ein Gestänge wird erreicht, daß die jeweils auf der Bearbeitungsseite befindliche Spritzschutzwand zur Bestückungsseite hin geneigt verläuft, während die auf der Bestückungsseite angeordnete Spritzschutzwand in etwa vertikal angeordnet ist. Auf diese Weise ist es möglich, den Spindelstock mit der Spindelachse bis nahe an die Mitte des Werkstücktisches heranzufahren, weil die auf der Bearbeitungsseite befindliche Spritzschutzwand so weit zur Bestückungsseite hin geneigt ist, daß die weit oberhalb der Oberfläche des Werkstücktisches befindliche Störkontur des Spindelstocks nicht mehr in Kollision mit der Spritzschutzwand geraten kann.

Mittels eines weiteren Gestänges wird erreicht, daß bei der Verdrehung des Werkstücktisches die Spritzschutzwände selbsttätig umgeklappt werden, so daß immer die jeweils auf der Bearbeitungsseite befindliche Spritzschutzwand in der erwähnten geneigten Position verläuft.

Die bekannte Werkzeugmaschine hat damit den Nachteil, daß der zwischen den beiden Schwenkachsen befindliche Oberflächenbereich des Werkstücktisches nicht zur Montage von Werkstücken nutzbar ist. Außerdem sind insgesamt zwei Gestänge erforderlich, um ein Umklappen der Spritzschutzwände zu bewirken.

Der Erfindung liegt demgegenüber die Aufgabe zugrunde, eine Werkzeugmaschine der eingangs genannten Art dahingehend weiterzubilden, daß die gesamte Oberfläche des Werkstücktisches zur Montage von Werkstücken benutzt werden kann und daß die Betätigung, d.h. das Umklappen der Spritzschutzwand mit besonders einfachen Mitteln erfolgt. Dies soll vor allem für Werkzeugmaschinen in sogenannter Langbett-Bauweise möglich werden, bei der eine Vielzahl von Werkstücken auf einem bis zu mehreren Meter langen Werkstücktisch nebeneinander angeordnet ist und der Werkstücktisch relativ zum Spindelstock in der Längsachse des Werkstücktisches verfahrbar ist.

Diese Aufgabe wird erfindungsgemäß dadurch gelöst, daß die Spritzschutzwand mittels eines Mitnehmers umklappbar ist, der am Spindelstock angebracht ist und bei einer Relativbewegung von Spindelstock und Werkstücktisch in Richtung einer Längsachse des Werkstücktisches an einer Kippanordnung der Spritzschutzwand angreift.

Die der Erfindung zugrundeliegende Aufgabe wird auf diese Weise vollkommen gelöst, weil bei einer Langbett-Werkzeugmaschine eine zuverlässige Abdichtung zwischen der jetzt nebeneinanderliegenden Bestückungsseite und Bearbeitungsseite möglich ist, wobei die Spritzschutzwand selbsttätig umgeklappt wird, wenn entweder der Spindelstock entlang dem Werkstücktisch oder umgekehrt der Werkstücktisch entlang dem Spindelstock verfahren wird.

Es ergibt sich damit erstmals bei Langbett-Werkzeugmaschinen der Vorteil, daß der Benutzer der Werkzeugmaschine auf der einen Seite des Langbett-Werkstücktisches Bestückungsarbeiten vornehmen kann, während auf der anderen Seite die Bearbeitung von dort befindlichen Werkstücken abläuft, ohne daß die Bestückungsarbeiten durch herumspritzendes Bohrwasser oder herumfliegende Materialspäne behindert werden. Auf diese Weise läßt sich die Auslastung von Langbett-Werkzeugmaschinen erheblich steigern, weil die Bearbeitung von Werkstücken nahezu ohne Unterbrechung möglich ist. Hat nämlich der Spindelstock alle auf der Bearbeitungsseite befindlichen Werkstücke bearbeitet, so kann er z.B. bei einer Ausführungsform der Erfindung mit verfahrbarem Spindelstock unter raumfestem Werkstücktisch vom Benutzer weg nach hinten verfahren werden, um dann hinter der Spritzschutzwand vorbei auf die zuvor als Bestückungsseite dienende Seite des Werkstücktisches zu gelangen. Während dieser Verfahrbewegung wird von dem mit dem Spindelstock bewegten Mitnehmer die Spritzschutzwand selbsttätig umgeklappt, so daß jetzt auf der alten Bestückungsseite die Bearbeitung von Werkstücken aufgenommen werden kann, während der Benutzer der Werkzeugmaschine sich seitlich zu dem zuvor als Bearbeitungsseite dienenden Bereich des Werkstücktisches bewegt, um dort die zuvor bearbeiteten Werkstücke abzunehmen und neue Werkstückrohlinge zu montieren.

Bei einer bevorzugten Ausgestaltung der Erfindung weist die Kippanordnung einen mit der Spritzschutzwand verbundenen Kipphebel auf, der um eine zur ersten Schwenkachse parallele zweite Schwenkachse schwenkbar ist und an einem freien Ende gabelartige Fortsätze aufweist, die die Spritzschutzwand beidseitig erfassen.

Diese Maßnahme hat den Vorteil, daß die Verwendung eines separaten Kippebels eine Fülle kinematischer Möglichkeiten, Kraftübersetzungen und dgl. eröffnet, die ein zuverlässiges Umklappen der Spritzschutzwand bei minimalem Kraftaufwand gewährleisten. Die gabelartige Erfassung der Spritzschutzwand hat den Vorteil, daß diese mit gewissem Spiel geführt wird, so daß es nicht zu einem Verklemmen der bewegten Elemente kommen kann. Außerdem wird durch die gabelartigen Fortsätze eine nur minimale mechanische Beanspruchung der Spritzschutzwand erreicht.

Bei einer bevorzugten Weiterbildung dieses Ausführungsbeispiels liegt die zweite Schwenkachse oberhalb der ersten Schwenkachse und der Mitnehmer greift unterhalb der zweiten Schwenkachse am Kipphebel an.

Diese Maßnahmen haben den Vorteil, daß sich eine besonders einfache Kinematik ergibt, bei der die erste Schwenkachse, die zweite Schwenkachse sowie der Angriffspunkt der Fortsätze ein Dreieck definieren, das zuverlässige Endstellungen beim Umklappen der Spritzschutzwand gewährleistet. Der Angriffspunkt des Mitnehmers am Kipphebel unterhalb der zweiten Schwenkachse gewährleistet, daß die Spritzschutzwand mit extrem einfachen Mitteln jeweils gegenläufig zur Bewegung z.B. bes Spindelstocks verschwenkt wird, also beispielsweise von links nach rechts, wenn der Spindelstock von rechts nach links verfahren wird.

Besonders bevorzugt ist auch eine Weiterbildung des genannten Ausführungsbeispiels, bei der eine Feder in der zweiten Schwenkachse am Kipphebel und außerhalb der ersten Schwenkachse an der Spritzschutzwand angreift.

Diese Maßnahme hat den Vorteil, daß in den Klapp-Endstellungen der Spritzschutzwand die Feder gespannt werden kann, so daß sie die Spritzschutzwand stabil in diesen Klapp-Endstellungen hält und ein versehentliches Zurückklappen der Spritzschutzwand, z.B. durch Zugluft oder dgl. verhindert wird. Je nachdem, wo der Angriffspunkt der Feder an der Spritzschutzwand liegt, kann die Feder dabei als Druck- oder als Zugfeder ausgebildet sein.

Bei einer weiteren bevorzugten Variante der Erfindung greift der Mitnehmer an einer Nase der Kippanordnung an, die Nase ist schwenkbar angeordnet und liegt unter Federkraft an einer Betätigungsfläche der Kippanordnung an, derart, daß beim Angreifen des Mitnehmers an der Nase in einer Richtung die Spritzschutzwand infolge einer Drehmomentübertragung über die Betätigungsfläche umgeklappt wird, während beim Angreifen des Mitnehmers an der Nase in der entgegengesetzten Richtung die Nase gegen die Federkraft von der Betätigungsfläche abgehoben wird und aus der Bewegungsbahn des Mitnehmers wegschwenkt.

Diese Maßnahme hat den Vorteil, daß Beschädigungen der Kippanordnung vermieden werden, wenn die Spritzschutzwand, nachdem sie selbsttätig z.B. vom Spindelstock umgeklappt wurde, von Hand wieder in die alte Stellung zurückgeklappt wird. In diesem Fall läuft nämlich der Mitnehmer beim nachfolgenden Verfahren z.B. des Spindelstocks gegen die Nase der Kippanordnung, die in dieser Position aus der Bewegungsbahn des Mitnehmers wegschwenkt und hinter dem vorbeibewegten Mitnehmer wieder in ihre Ausgangsstellung zurückschwenkt, so daß bei einem erneuten Zurückfahren des Spindelstocks die Spritzschutzwand jetzt wieder umgeklappt wird.

Bei einer weiteren bevorzugten Ausgestaltung der Erfindung umfaßt die Spritzschutzwand eine um die erste Schwenkachse verschwenkbare Platte sowie eine Abdeckung, die symmetrisch zu einer die erste Schwenkachse enthaltenden Längsmittelebene des Werkstücktisches angeordnet ist und einen Bereich auf der Bestückungsseite zwischen der Längsmittelebene und der Platte zu der vom Spindelstock abgewandten Seite des Werkstücktisches hin abdeckt.

Diese Maßnahme hat den Vorteil, daß der Benutzer der Werkzeugmaschine zuverlässig vor Bohrwasser und Materialspänen geschützt wird und zwar auch in dem Bereich, in dem die umklappbare Spritzschutzwand über die Längsmittelebene des Werkstücktisches hinaus auf die jeweilige Bestückungsseite hinausragt. Die Abdeckung wirkt vorteilhaft mit Längs-Schiebetüren zusammen, wie sie bei Langbett-Werkzeugmaschinen an sich bekannt sind. Derartige Schiebetüren weisen eine vertikale Begrenzung auf, so daß diese Schiebetüren jeweils bis zur Längsmittelebene hin vorgeschoben werden können und damit den übrigen Bereich der Bearbeitungsseite nach vorne zum Benutzer hin abdecken.

Bei einer Variante dieses Ausführungsbeispiels umfaßt die Abdeckung einen flexiblen Vorhang, der von einer vom Spindelstock abgewandten Längskante der Platte zu einem in der Längsmittelebene angeordneten, im wesentlichen vertikalen Schenkel verläuft.

Diese Maßnahme hat den Vorteil, daß der zwischen der verschwenkbaren Platte und der Längsmittelebene verbleibende V-förmige Bereich zu beiden Schwenkseiten der Platte hin zuverlässig abgedeckt wird.

Bei einer bevorzugten Ausgestaltung dieser Variante ist der Vorhang im Höhenabstand von der ersten Schwenkachse an der Längskante angeordnet, der Schenkel ist im seitlichen Abstand vor dem Werkstücktisch angeordnet und geht zum Werkstücktisch hin in eine sich V-förmig erweiternde schräge Rinne über.

Diese Maßnahme hat den Vorteil, daß die Erfindung bevorzugt bei solchen Werkzeugmaschinen angewandt werden kann, bei denen die Abdeckung zum Benutzer hin nach vorne und oben hin auskragt, so daß der Benutzer der Werkzeugmaschine mit den Beinen unterhalb des Abdeckblechs der Werkzeugmaschine gelangen kann, was ein ergonomischeres Arbeiten ermöglicht als wenn er vor einer vertikalen Begrenzungswand der Werkzeugmaschine stehen würde. Auch hat die auskragende Bauweise derartiger Werkzeugmaschinen den Vorteil, daß Führungen für die Schiebetüren, für ein Kommandopult u. dgl., einschließlich des erforderlichen Kabelschlepps, unterhalb der Auskragung angebracht werden können, so daß diese Elemente den Benutzer der Werkzeugmaschine ebenfalls nicht behindern. Weiterhin ist bei dieser Variante von Vorteil, daß der flexible Vorhang nicht bis zur ersten Schwenkachse hinunterreicht, so daß die elastische Verbiegung des Vorhanges begrenzt bleibt und nicht zu einer schnellen Materialermüdung beim Vorhang führt.

Weiterhin ergibt sich der wesentliche Vorteil, daß die Bewegungsfreiheit des Benutzers im Schulterbereich erheblich erhöht wird, weil der im wesentlichen vertikal verlaufende Schenkel der Abdeckung sich in Schulterhöhe befindet und der Benutzer daher auch in unmittelbarer Nähe der verschwenkbaren Platte operieren kann, ohne seitlich von der Abdeckung behindert zu werden, die dort im Bereich des flexiblen Vorhanges Arbeitsraum in Schulterhöhe freiläßt.

Bei einer anderen Variante der oben angegebenen Abdeckung umfaßt diese ein im Horizontalschnitt U-förmiges Wandteil, das sich vom Werkstücktisch nach oben V-förmig aufweitet, derart, daß die Platte in ihren geklappten Endlagen innerhalb der vom Wandteil definierten Kontur verbleibt.

Diese Maßnahme hat den Vorteil, daß weniger bewegliche Elemente als beim vorstehend erläuterten Ausführungsbeispiel erforderlich sind, insbesondere kein flexibler Vorhang, allerdings unter Inkaufnahme größerer Abmessungen der Abdeckung, vor allem im Schulterbereich des Benutzers.

Bei allen vorstehend genannten Ausführungsbeispielen von Abdeckungen ist bevorzugt, wenn die Bearbeitungsseite zu der vom Spindelstock abgewandten Seite des Werkstücktischs hin bis zur Abdeckung mittels Schiebetüren verschließbar ist.

Diese Maßnahme hat den bereits weiter oben erläuterten Vorteil, daß damit eine allseitige Abdeckung der Bearbeitungsseite zum Benutzer hin möglich wird.

Schließlich ist noch ein Ausführungsbeispiel der Erfindung bevorzugt, bei dem die Spritzschutzwand eine erste Platte aufweist, die mit einem ersten Rand um die erste Schwenkachse schwenkbar ist, ferner eine zweite Platte um einen zum ersten Rand parallelen zweiten Rand der ersten Platte schwenkbar ist und schließlich eine Parallelogrammführung der Platten vorgesehen ist, derart, daß in Umklapp-Endstellungen der Spritzschutzwand die erste Platte geneigt und die zweite Platte vertikal verläuft.

Diese Maßnahme hat den Vorteil, daß der Arbeitsraum auf der Bestückungsseite nur in geringerem Umfange verkleinert wird, weil die verschwenkbare Platte nicht zu ihrem oberen freien Ende in die Bestückungsseite hineinragt, sondern vielmehr z.B. auf halber Länge oder einem Drittel ihrer Länge vertikal nach oben weggeklappt ist. Diese Formgebung entspricht in etwa der üblichen Außenkontur von Spindelstöcken, die, vom Werkzeug nach oben aus gesehen, zunächst sich nach oben ausweiten und dann mit dem Spindelstockgehäuse vertikal verlaufen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Seitenansicht, vom Benutzer aus gesehen, einer erfindungsgemäßen Langbett-Werkzeugmaschine;

Fig. 2 eine perspektivische Seitenansicht eines ersten Ausführungsbeispiels einer Spritzschutzwand einer erfindungsgemäßen Werkzeugmaschine in einer ersten Endstellung;

Fig. 3 eine Ansicht wie Fig. 2, jedoch für eine zweite Endstellung der Spritzschutzwand;

Fig. 4 eine Seitenansicht der Spritzschutzwand gemäß den Fig. 2 und 3 in Längsrichtung des Werkstücktisches gesehen;

Fig. 5 eine Draufsicht auf die Anordnung gemäß Fig. 4;

Fig. 6 in stark vergrößertem Maßstab eine Kippanordnung zur Betätigung der Spritzschutzwand gemäß den Fig. 1 bis 5;

Fig. 7 eine schematisierte Seitenansicht der Anordnung gemäß Fig. 6, von links gesehen;

Fig. 8 eine noch weiter vergrößerte Detailansicht von Betätigungselementen der Kippanordnung gemäß den Fig. 6 und 7;

Fig. 9 eine äußerst schematisierte Ansicht aus dem Blickwinkel der Fig. 1, für eine Variante einer Spritzschutzwand mit Parallelogrammführung;

Fig. 10 eine Variante zu den in den Fig. 2 bis 4 erkennbaren Abdeckungen der Spritzschutzwand.

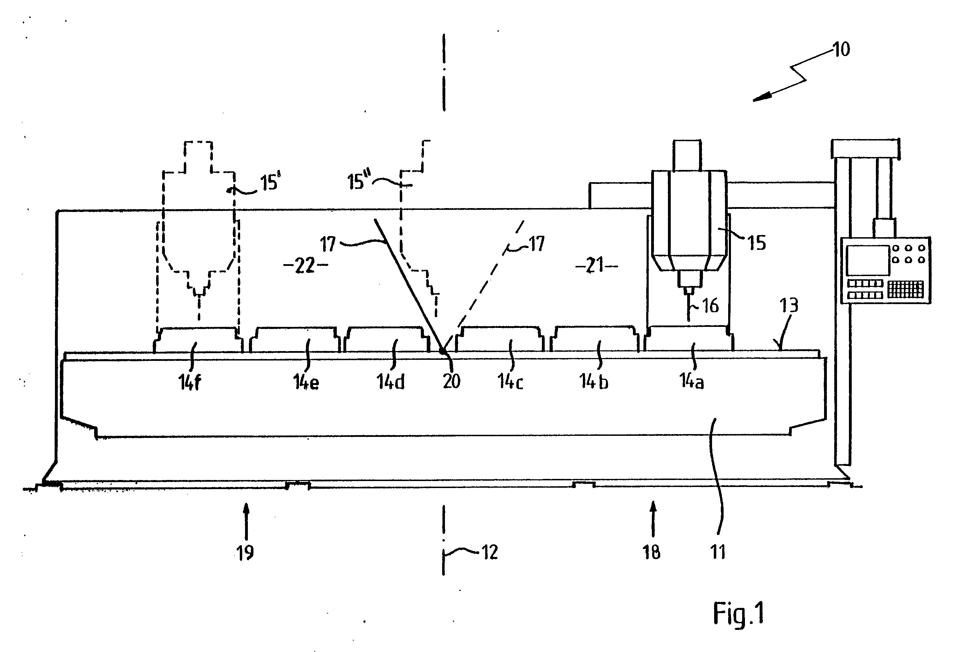

In Fig. 1 bezeichnet 10 insgesamt eine Werkzeugmaschine, nämlich ein sogenanntes Langbett-Bearbeitungszentrum. Bearbeitungszentren werden dazu verwendet, um mit Hilfe einer numerischen Steuerung Werkstücke nacheinander einer Vielzahl von Bearbeitungsvorgängen zu unterziehen. Hierzu werden in eine Spindel eines Spindelstocks nacheinander verschiedenartige Werkzeuge aus einem Werkzeugmagazin eingewechselt, und das Werkstück oder die Werkstücke werden nach einem vorgegebenen Programm, vorzugsweise durch Bohren oder Fräsen, bearbeitet.

Bei der in Fig. 1 dargestellten Werkzeugmaschine 10 ist ein Langbett-Werkstücktisch 11 vorgesehen, der in der Zeichenebene der Fig. 1 eine Länge von mehreren Metern aufweisen kann. Zu beiden Seiten einer gedachten Längsmittelebene 12, die senkrecht auf der Zeichenebene der Fig. 1 steht, erstreckt sich eine Oberfläche 13 des Werkstücktischs 11, auf der Werkstücke 14a bis 14f aufgespannt sind. Ein Spindelstock 15 ist aus der Sicht der Fig. 1 an einem Schlitten hinter dem Werkstücktisch 11 gelagert und parallel zur Längsachse des Werkstücktischs 11 verfahrbar, ebenso senkrecht zur Zeichenebene der Fig. 1 sowie in der Höhe. Neben dieser Drei-Koordinaten-Steuerung des Spindelstocks 15 können naturgemäß auch weitere Dreh- oder Schwenkachsen vorgesehen sein.

In den Spindelstock 15 sind Werkzeuge 16 unterschiedlicher Art aus einem in Fig. 1 nicht dargestellten Werkzeugmagazin einwechselbar, um an den Werkstücken 14a bis 14f nacheinander eine Vielzahl von Bearbeitungsvorgängen, insbesondere durch Bohren oder Fräsen, ausführen zu können.

Eine Spritzschutzwand 17 unterteilt die Oberfläche 13 des Werkstücktischs 11 in zwei Abschnitte, von denen zu einem bestimmten Zeitpunkt in der Darstellung der Fig. 1 der rechte Abschnitt eine Bearbeitungsseite 18 und der linke Abschnitt eine Bestückungsseite 19 darstellt. Die Spritzschutzwand 17 ist um eine senkrecht zur Zeichenebene der Fig. 1 verlaufende, d.h. parallel zur Oberfläche 13 des Werkstücktischs 11 verlaufende erste Schwenkachse 20 zwischen zwei Endstellungen klappbar, wie mit 17 und 17′ in Fig. 1 angedeutet. Wie man deutlich aus Fig. 1 erkennen kann, entstehen auf diese Weise oberhalb der Bearbeitungsseite 18 und der Bestückungsseite 19 Arbeitsräume 21 bzw. 22 unterschiedlicher Größe.

Auf diese Weise wird erreicht, daß auf der Bearbeitungsseite 18 die Werkstücke 14a bis 14c vom Werkzeug 16 des Spindelstocks 15 bearbeitet werden können, ohne daß Bohrwasser oder Materialspäne hinüber auf die Bestückungsseite 19 gelangen können. Während das Werkzeug 16 nacheinander die Werkstücke 14a bis 14c bearbeitet, kann ein Benutzer der Werkzeugmaschine 10 auf der Bestückungsseite 19 zunächst die zuvor dort bearbeiteten Werkstücke entnehmen und dann neue, unbearbeitete Werkstückrohlinge, beispielsweise die in Fig. 1 dargestellten Werkstücke 14d bis 14f, für eine nachfolgende Bearbeitung montieren.

Die Neigung der Spritzschutzwand 17 hat dabei den Sinn, ein möglichst vollständiges Verfahren des Spindelstocks 15 auf der jeweiligen Bearbeitungsseite 18 zu ermöglichen. Wie man nämlich deutlich aus Fig. 1 erkennen kann, steht das Gehäuse des Spindelstocks 15 seitlich weit über das jeweilige Werkzeug 16 vor. Wenn demzufolge mittels des Werkzeuges 16 ein Werkstück 14c bearbeitet werden soll, das in unmittelbarer Nähe der ersten Schwenkachse 20 auf die Oberfläche 13 aufgespannt ist, so ragt die Außenkontur des Spindelstocks 15 bis links über die Längsmittelebene 12 hinaus, wie mit 15″ in Fig. 1 gestrichelt eingezeichnet ist. Wäre nun in der Längsmittelebene 12 eine starre vertikale Spritzschutzwand vorgesehen, könnte man mit dem Werkzeug 16 nur so weit an die Spritzschutzwand heranfahren, wie dies dem seitlichen Abstand der Werkzeugachse zur Außenkontur des Gehäuses des Spindelstocks 15 entspricht. Durch die in Fig. 1 dargestellte asymmetrische Unterteilung der Arbeitsräume 21 und 22 kann hingegen die Oberfläche 13 auf der Bearbeitungsseite 18 vollständig ausgenutzt werden.

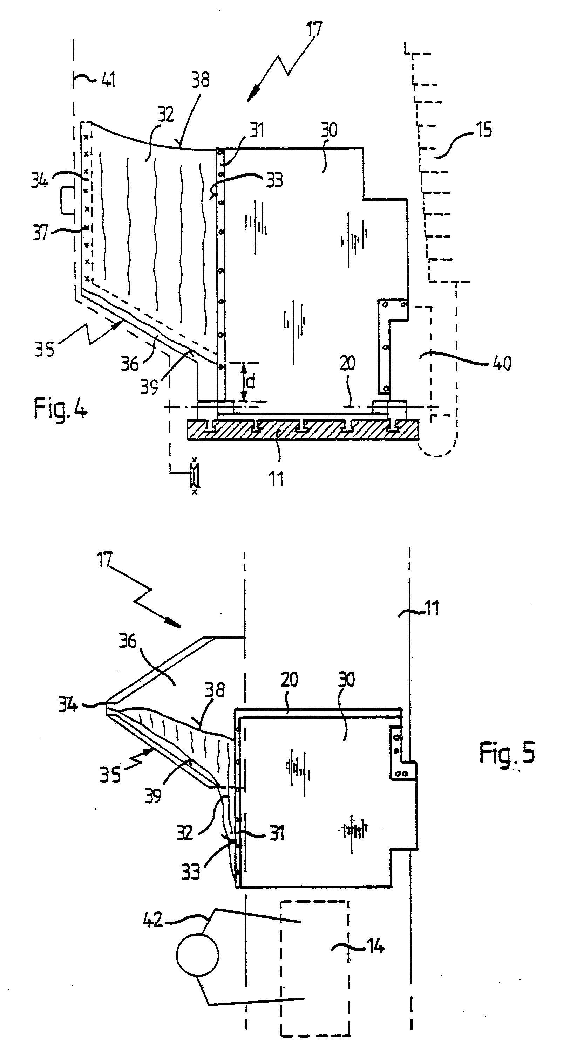

Hat nun der Spindelstock 15 die Werkstücke 14a bis 14c auf der Bearbeitungsseite 18 vollständig bearbeitet, wird der Spindelstock 15 mittels des Schlittens senkrecht zur Zeichenebene der Fig. 1 nach hinten hinter den Werkstücktisch 11 verfahren. In dieser Position wird der Spindelstock 15 nach links auf die Bestückungsseite 19 verfahren, bis er z.B. eine Pos. 15′ in Fig. 1 einnimmt. Die Anordnung ist dabei so getroffen, daß der Schlitten des Spindelstocks 15 auf seinem Verfahrweg zwischen den Positionen 15 und 15′ in Fig. 1 die Spritzschutzwand aus der durchgezogen eingezeichneten Stellung 17 in die gestrichelt eingezeichnete Stellung 17′ umklappt, wie dies weiter unten anhand der Fig. 4 bis 8 noch im einzelnen erläutert werden wird.

Wenn der Spindelstock die Pos. 15′ erreicht hat, die Spritzschutzwand sich also in der Position 17′ befindet, dient jetzt die linke Hälfte der Oberfläche 13 als Bearbeitungsseite und die rechte Hälfte als Bestückungsseite. Es werden also jetzt die noch unbearbeiteten Werkstücke 14e bis 14f mittels des Werkzeugs 16 bearbeitet, während der Benutzer die zuvor bearbeiteten Werkstücke 14a bis 14e auf der vormaligen Bearbeitungsseite 18 (jetzt Bestückungsseite) demontieren und durch neue, unbearbeitete Werkstücke ersetzen kann.

Durch das Umklappen der Spritzschutzwand 17, 17′ wird in jedem Augenblick erreicht, daß der Arbeitsraum 21 bzw. 22 auf der jeweiligen Bearbeitungsseite größer ist als auf der Bestückungsseite. Im übrigen wird die Werkzeugmaschine kontinuierlich eingesetzt, weil parallel zur Werkstückbearbeitung auf der Bearbeitungsseite stets ein Werkstückwechsel auf der Bestückungsseite erfolgen kann, ohne die Werkzeugmaschine 10 stillsetzen zu müssen.

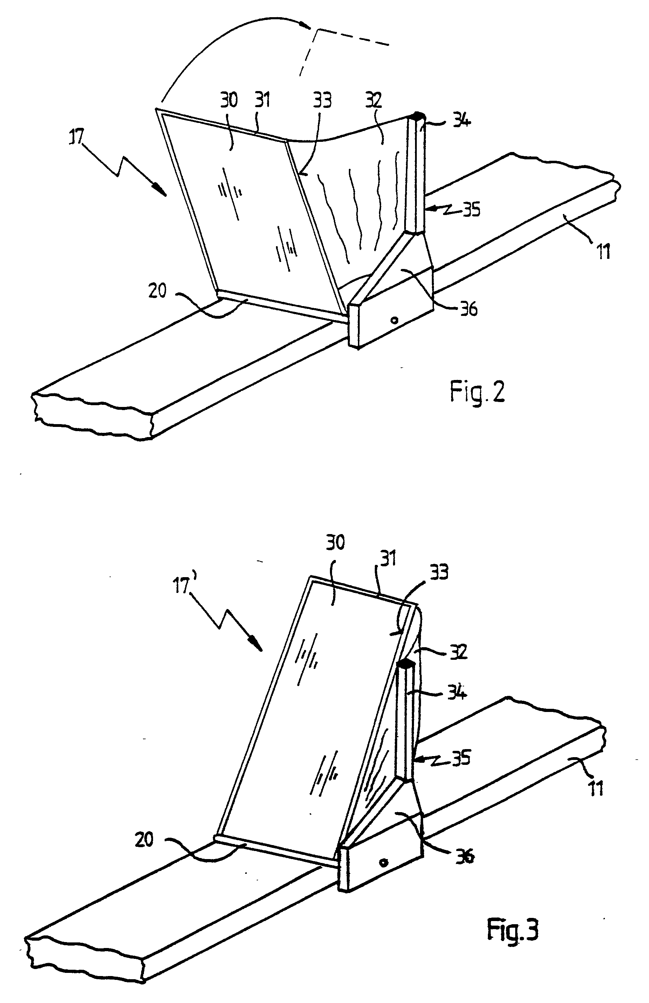

Fig. 2 zeigt in perspektivischer Ansicht ein erstes Ausführungsbeispiel einer erfindungsgemäßen Spritzschutzwand in der Position 17. Die Spritzschutzwand 17 weist eine transparente Platte 30 auf, die von rechteckiger Gestalt ist und den Werkstücktisch 11 im wesentlichen ganz überspannt. An ihrer unteren Längskante ist die transparente Platte 30 mittels eines Scharniers mit dem Werkstücktisch 11 verbunden, so daß hierdurch die erste Schwenkachse 20 gebildet wird. Das Scharnier ist zweckmäßigerweise so ausgebildet, daß es mit wenigen Handgriffen gelöst werden kann.

Auf der dem Benutzer zugewandten Seite der Platte 30 ist ein flexibler Vorhang 32 an einer vertikalen Längskante 33 der Platte 30 angeschlagen. Eine hierzu im wesentlichen parallele vertikale Längskante des flexiblen Vorhanges 32 ist an einem vertikalen U-förmigen Schenkel 34 befestigt, der Teil einer Abdeckung 35 ist. Der Schenkel 34 befindet sich im seitlichen Abstand vor dem Werkstücktisch 11 und geht nach unten in eine V-förmige Rinne 36 über, die sich von dem U-förmigen Schenkel 34 schräg nach unten erweitert und eine Rinne für Bohrwasser und Materialspäne bildet, die auf den flexiblen Vorhang 32 gelangen, von diesem abperlen und über die Rinne 36 in eine in Fig. 2 nicht näher dargestellte Aufnahme des Werkstücktisches 11 gelangen.

Fig. 3 zeigt die Stellung 17′ der Spritzschutzwand, und man erkennt, daß der flexible Vorhang 32 zusammen mit dem Verschwenken der Platte 30 umgeschlagen wurde, derart, daß die Unterkante des Vorhanges 32 in der Rinne 36 von einer Klapp-Endstellung in die andere verbracht wurde.

In den Fig. 4 und 5 ist die Spritzschutzwand 17 nochmals dargestellt, und man erkennt deutlich, daß der in Fig. 4 linke vertikale Längsrand des flexiblen Vorhanges 32 an Befestigungspunkten 37 im U-förmigen Schenkel 34 gehalten ist, während ein oberer Rand 38 und ein unterer Rand 39 unbefestigt sind. Der untere Rand 39 verläuft in einem Abstand d oberhalb der ersten Schwenkachse 20, so daß der untere Rand 39 beim Verschwenken der Spritzschutzwand 17 über den Boden der V-förmigen Rinne 36 gleitet, wie dies bereits zuvor beschrieben wurde.

Aus Fig. 5 wird besonders deutlich, daß auf diese Weise eine vollkommene Abdeckung eines Arbeitsbereiches für einen Benutzer 42 erreicht wird, der sich auf der in Fig. 5 unteren Hälfte des Werkstücktischs 11 befindet, um dort ein Werkstück 14 zu handhaben.

In Fig. 4 ist noch angedeutet, daß die Vorderseite der Werkzeugmaschine 10 mittels Schiebetüren 41 verschließbar ist, die nach außen vorgekröpft ausgebildet sind und unterhalb der Unterseite des Werkstücktisches 11 in Rollen/Schienen-Führungen gehalten sind. Die Schiebetüren 41 weisen vertikale Begrenzungskanten auf und lassen es demzufolge zu, die Vorderseite der Werkzeugmaschine 10 in der Ansicht der Fig. 1 z.B. auf der rechten Hälfte bis zur Längsmittelebene 12 zu verschließen. In der Längsmittelebene 12 befindet sich jedoch auch der vertikale Schenkel 34 der Abdeckung 35, so daß, in der Ansicht der Fig. 1, z.B. die gesamte rechte Hälfte der Werkzeugmaschine 10, d.h. die Bearbeitungsseite 18, nach vorne mittels der Schiebetüren 41 verschlossen werden kann und zusätzlich der V-förmige Spalt zwischen Spritzschutzwand 17 und Längsmittelebene 12 durch den flexiblen Vorhang 32 verschlossen wird. Der Benutzer 42 kann daher nahe an die Spritzschutzwand 17 herantreten, wobei ihm trotz der Neigung der Spritzschutzwand 17 im Schulterbereich ein genügender Bewegungsraum verbleibt, weil der flexible Vorhang 32 sich zu dem vertikal verlaufenden Schenkel 34 hin wölbt.

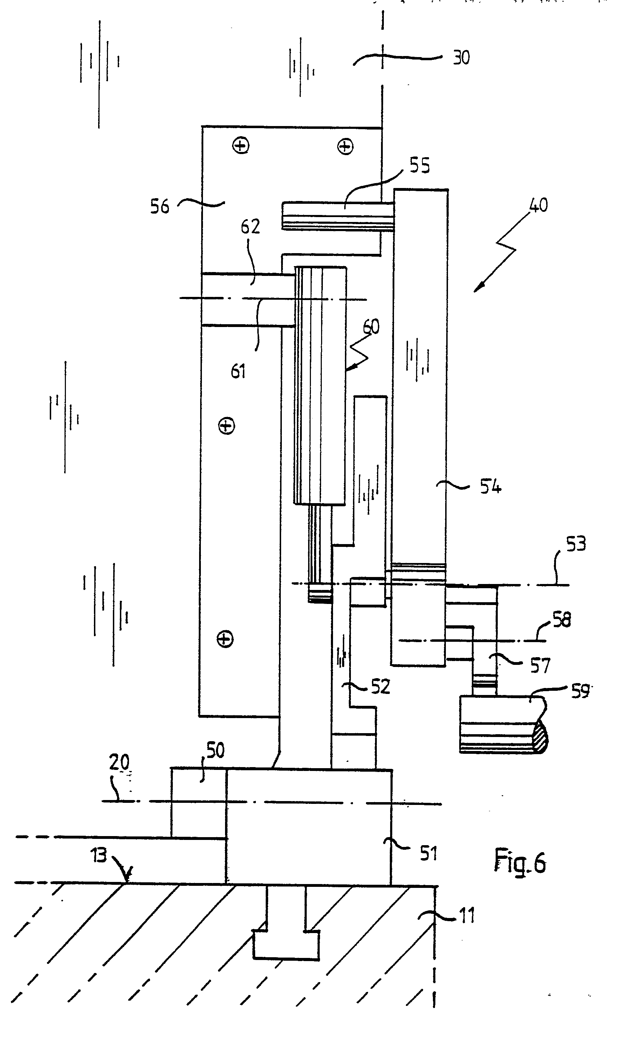

Schließlich ist mit 40 in Fig. 4 noch eine Umklappeinrichtung angedeutet, die nachstehend anhand der Fig. 6 bis 8 näher erläutert werden soll.

Fig. 6 zeigt in der Ansicht der Fig. 4 und in vergrößertem Maßstabe Einzelheiten der Umklappeinrichtung 40.

Die Platte 30 ist mit Scharnierzapfen 50 in einem Scharnierlager 51 gehalten, um die erste Schwenkachse 20 darzustellen. Das Scharnierlager 51 ist auf die Oberfläche 13 des Werkstücktisches 11 aufgeschraubt.

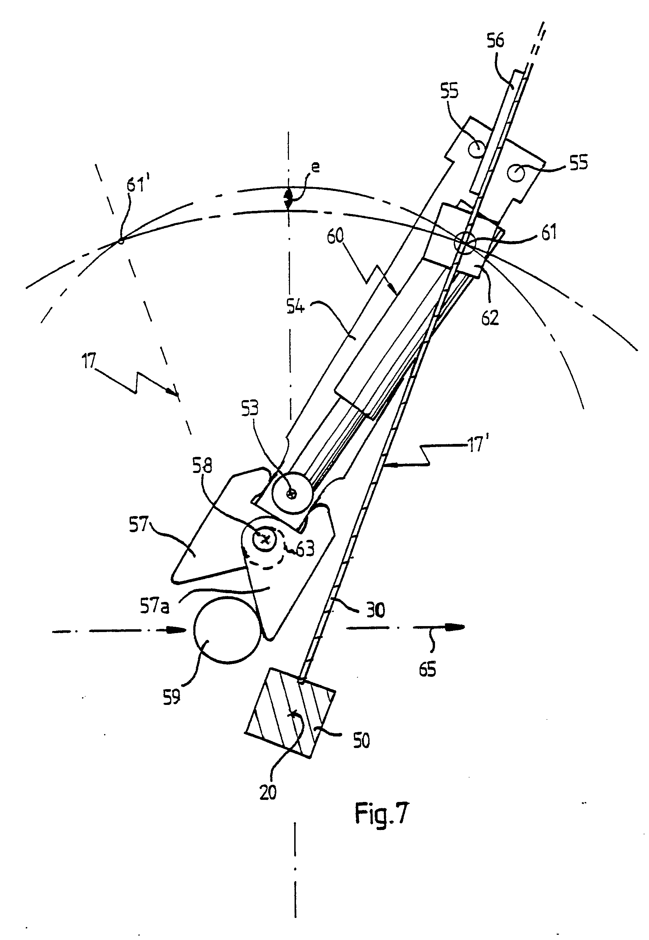

Von dem raumfesten Scharnierlager 51 erstreckt sich nach oben ein starrer Lagerarm 52, der eine Lagerbohrung für eine zweite Schwenkachse 53 enthält. In der zweiten Schwenkachse 53 ist mittels eines geeigneten Zapfens ein Kipphebel 54 senkrecht zur Zeichenebene der Fig. 6 schwenkbar gelagert, wie aus Fig. 7 deutlich erkennbar wird. Der Kipphebel 54 trägt an seinem oberen freien Ende eine Gabel 55, deren Zinken die Platte 30 bzw. ein damit verbundenes Verstärkungsblech 56 beidseitig umfassen.

Unterhalb der zweiten Schwenkachse 53 ist der Kipphebel 54 mit Nasen 57 versehen, die um eine dritte Schwenkachse 58 gegen die Kraft einer Feder 63 verschwenkbar sind. Jeweils eine der Nasen 57 befindet sich in einer der Klapp-Endstellungen in der Bewegungsbahn eines Mitnehmers 59, der starr mit dem Schlitten verbunden ist, auf dem der Spindelstock 15 parallel zur Längsachse des Werkstücktisches 11 verfahrbar ist.

Eine Feder 60, im dargestellten Beispielsfalle eine Druckfeder, ist mit ihrem einen Ende in der zweiten Schwenkachse 53 drehbar am Kipphebel 54 befestigt. Ihr oberes freies Ende ist in einer vierten Schwenkachse 61 drehbar an einem Flanschteil 62 befestigt, das seinerseits starr mit dem Platte 30 bzw. dem Verstärkungsblech 56 verbunden ist.

Die Schwenkachsen 20, 53, 58 und 61 verlaufen sämtlich zueinander parallel.

Die Wirkungsweise der Umklappeinrichtung 40 gemäß Fig. 6 und 7 ist wie folgt:

In der in Fig. 7 eingezeichneten Stellung erkennt man deutlich, daß die zweite Schwenkachse 53 vertikal oberhalb der ersten Schwenkachse 20 verläuft. Diese beiden Schwenkachsen 20, 53 sowie der Angriffspunkt der Gabel 55 am Verstärkungsblech 56 bzw. der Platte 30 definieren ein Dreieck, das zwei stabile Klapp-Endlagen gewährleistet. Dies wird zusätzlich durch die Druckfeder 60 unterstützt, deren Angriffspunkt an der Platte 30 in der vierten Schwenkachse 61 innerhalb des vorstehend definierten Dreiecks liegt, so daß die Feder 60 während des Umklappens der Platte 30 um den in Fig. 7 eingezeichneten Betrag e zusammengedrückt wird und sich beim Erreichen der Endlagen 17 bzw. 17' wieder entspannen kann. Das Maß e ergibt sich aus dem Abstand von Kreisbögen um die Achsen 20 bzw. 53 mit Schnittpunkten in der vierten Schwenkachse 61 bzw. 61' in der anderen Umklapp-Endstellung.

Wenn der Mitnehmer 59 in der Ansicht der Fig. 7 von links kommend in Richtung eines Pfeiles 65 nach rechts weiterläuft, gerät er in Anlage an das untere freie Ende der Nase 57a, die in dieser Belastungsrichtung eine drehstarre Verbindung mit dem Kipphebel 54 hat. Auf seinem Weg in Richtung des Pfeiles 65 verschwenkt der Mitnehmer 59 durch Anlage an der Nase 57a daher den Kipphebel 54 um die zweite Schwenkachse 53 in Gegenuhrzeigerrichtung. Es wird auf diese Weise also erreicht, daß die Spritzschutzwand 17 mit der Platte 30 stets gegenläufig zum axialen Verfahrweg des Schlittens des Spindelstocks 15 umgeklappt wird, wie dies eingangs zu Fig. 1 bereits erläutert wurde.

Es kann nun der Fall eintreten, daß - in der Ansicht der Fig. 1 - der Spindelstock sich in der Position 15' befindet und die Spritzschutzwand sich folglich in der Position 17' befindet. Wird nun die Spritzschutzwand, ohne daß der Spindelstock 15' verfahren würde, von Hand wieder in die Position 17 zurückgeklappt, könnte dies zu Problemen im Bereich der Mitnahme führen, wenn nun der Spindelstock 15' wieder in die Position 15 zurückkehrt. Um in diesem Falle Kollisionsprobleme zu vermeiden, ist die Anordnung der Nasen 57, 57a so getroffen, daß diese jeweils einzeln gegen die Kraft von Federn 63 um die dritte Schwenkachse 58 verschwenkbar sind.

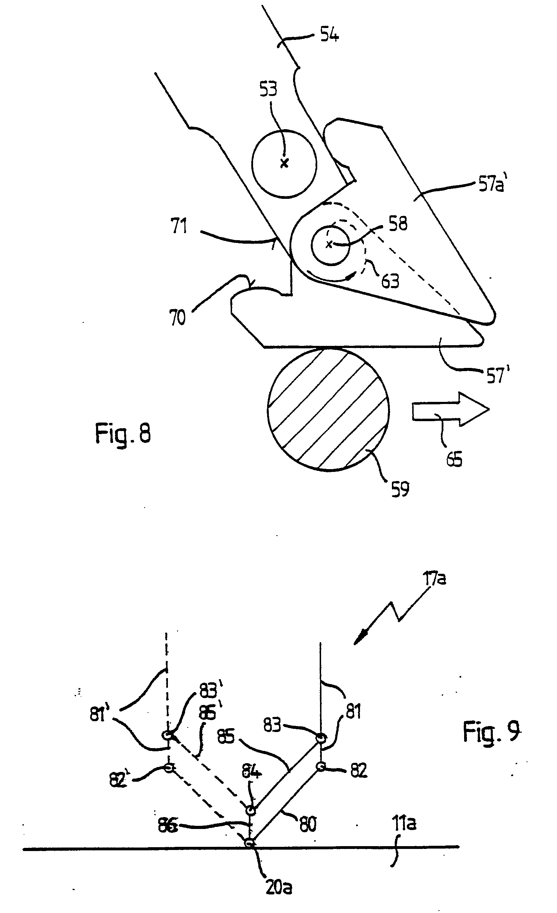

Fig. 8 zeigt die vorstehend geschilderte Situation, in der der Mitnehmer 59 in Richtung des Pfeils 65 nach rechts läuft, während die Spritzschutzwand bereits in der umgeklappten linken Endstellung 17 ist.

Die Nasen 57 und 57a sind jeweils mit Vorsprüngen 70 versehen, die im normalen Betrieb unter der Kraft der Feder 63, beispielsweise einer Spiralfeder oder einer Schenkelfeder, an einer Betätigungsfläche 71 des Kipphebels 54 anliegen. In der Ansicht der Fig. 7 und 8 kann daher die Nase 57 im Gegenuhrzeigersinn und die Nase 57a im Gegenuhrzeigersinn gegen die Kraft der jeweiligen Federn 63 verschwenkt werden, während sie in jeweils entgegengesetzter Drehrichtung eine drehmomentstarre Verbindung mit dem Kipphebel 54 bilden.

Bei der in Fig. 8 dargestellten Situation, in der sich die Spritzschutzwand bereits in der umgeklappten Stellung befindet, läuft der Mitnehmer 59 die Nase 57 von links unterhalb der dritten Schwenkachse 58 an, so daß die Nase 57 im Gegenuhrzeigersinn in die in Fig. 8 eingezeichnete Stellung 57' verschwenkt wird. Der Vorsprung 70 hebt dabei von der Betätigungsfläche 71 ab. Die Geometrie der Anordnung ist so gewählt, daß die verschwenkte Nase 57' sich außerhalb der Bewegungsbahn des Mitnehmers 59 befindet, der in Richtung des Pfeiles 65 seinen Weg fortsetzen kann, ohne daß dadurch der Kipphebel 54 betätigt wird. Sobald der Mitnehmer 59 an der verschwenkten Nase 57' vorbeigefahren ist, schwenkt diese selbsttätig unter der Kraft der Feder 63 wieder in die Ausgangslage zurück.

Beim nachfolgenden Zurückwandern des Mitnehmers 59 entgegen der Richtung des Pfeiles 65 kann dann auch die Spritzschutzwand 17 wieder dadurch umgeklappt werden, daß der Mitnehmer 59 nunmehr von rechts unterhalb der dritten Schwenkachse 58 an der Nase 57' angreift.

Fig. 9 zeigt noch eine Variante der Erfindung, bei der die Platte 30 der Fig. 2 bis 7 durch eine erste Platte 80 und eine zweite Platte 81 ersetzt wird. Die erste Platte 80 ist ähnlich wie die oben geschilderte Platte 30 an einer unteren Horizontalkante in der ersten Schwenkachse 20a an der Oberseite des Werkstücktisches 11a gelagert. Die erste Platte 80 weist hingegen an ihrer oberen Horizontalkante ein Scharnier 82 auf, über das sie mit der zweiten Platte 81 schwenkbar verbunden ist. Ein erstes Gelenk 83 in der zweiten Platte 81 und ein zweites Gelenk 84 mit Stangen 85 und 86 bilden ein Parallelogramm, das durch die erste Platte 80, einen unteren Abschnitt der zweiten Platte 81 zwischen Scharnier 82 und erstem Gelenk 83, die Stangen 85 und 86 sowie die erste Schwenkachse 20a, das Scharnier 82 und die Gelenke 83 und 84 gebildet wird.

Wird nun die auf diese Weise gebildete Spritzschutzwand 17a aus der in Fig. 9 rechts durchgezogen eingezeichneten Stellung in die links gestrichelt eingezeichnete Stellung verschwenkt, so gewährleistet die zuvor geschilderte Parallelogrammführung, daß die zweite Platte 81 bzw. 81' stets vertikal ausgerichtet ist.

Auf diese Weise wird eine noch vollkommenere Anpassung des seitlichen Arbeitsraumes an die Außenkontur des Spindelstocks 15 erreicht, weil ein Spindelstock üblicher Bauart sich nach unten zum Werkzeug hin verjüngt und nach oben eine vertikal verlaufende Außenverkleidung aufweist. Es entsteht auf diese Weise, mit anderen Worten, ein größerer Bewegungsspielraum für den Benutzer 42, weil die Spritzschutzwand 17a am oberen freien Ende nur so weit in den Arbeitsraum oberhalb der Bestückungsseite hineinreicht, wie dies aufgrund der Außenkontur des Spindelstocks 15 gerade erforderlich ist.

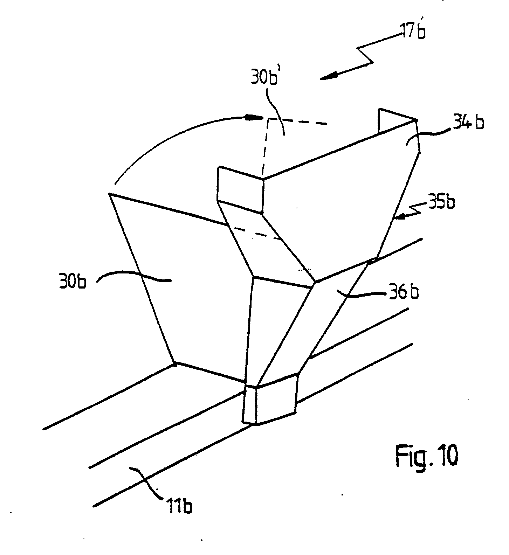

Schließlich zeigt Fig. 10 noch eine Variante einer Verkleidung 35b einer Spritzschutzwand 17b.

Bei der Spritzschutzwand 17b ist lediglich eine verschwenkbare Platte 30b, nicht jedoch ein flexibler Vorhang vorgesehen.

Um den Benutzer der Werkzeugmaschine auch in diesem Falle im Zwischenraum zwischen der Längsmittelebene 12 und den Umklapp-Endstellungen der Spritzschutzwand 17b zu schützen, ist der U-förmige Schenkel 34b sehr viel breiter als in den Fig. 2 bis 5 ausgebildet und verjüngt sich nach unten hin zur Rinne 36b. Die Außenkontur der Abdeckung 35b entspricht damit dem V-förmigen Bereich, wie er in Fig. 1 in Seitenansicht der Werkzeugmaschine 10 zu erkennen ist. Damit ist zwar im Schulterbereich des Benutzers 42 weniger Freiraum vorhanden, allerdings ist bei der Spritzschutzwand 17b kein flexibler Vorhang mit entsprechenden Halterungen und entsprechendem Verschleiß der elastisch verformten Elemente vorgesehen.

## Ansprüche

1. Werkzeugmaschine mit einem Werkstücktisch (11), bei dem ein erster Bereich als Bearbeitungsseite (18) erste Werkstücke (14a bis 14c) zum Bearbeiten mittels eines Werkzeuges (16) der Werkzeugmaschine (10) trägt und bei dem ein zweiter Bereich als Bestückungsseite (19) während des Bearbeitens der ersten Werkstücke (14a bis 14c) mit zweiten Werkstücken (14d bis 14f) bestückbar ist, wobei die Bereiche durch Lageveränderung eines Spindelstocks (15) der Werkzeugmaschine (10) vertauschbar sind, ferner zwischen den Bereichen eine um eine parallel zur Oberfläche des Werkstücktisches (11) verlaufende erste Schwenkachse (20) selbsttätig schwenkbare Spritzschutzwand (17) angeordnet ist, die den von den Bereichen definierten Arbeitsraum (21, 22) für den Spindelstock (15) der Werkzeugmaschine (10) bzw. einen Benutzer (42) asymmetrisch unterteilt, derart, daß auf der jeweiligen Bearbeitungsseite (13) ein größerer Arbeitsraum (21) vorhanden ist als auf der jeweiligen Bestückungsseite (19), dadurch gekennzeichnet, daß die Spritzschutzwand (17) mittels eines Mitnehmers (59) umklappbar ist, der am Spindelstock (15) angebracht ist und bei einer Relativbewegung von Spindelstock (15) und Werkstücktisch (11) in Richtung einer Längsachse des Werkstücktisches (11) an einer Kippanordnung (50 bis 58, 60 bis 62) der Spritzschutzwand (17) angreift.

2. Werkzeugmaschine mit einem Werkstücktisch (11), bei dem ein erster Bereich als Bearbeitungsseite (18) erste Werkstücke (14a bis l4c) zum Bearbeiten mittels eines Werkzeuges (16) der Werkzeugmaschine (10) trägt und bei dem ein zweiter Bereich als Bestückungsseite (19) während des Bearbeitens der ersten Werkstücke (14a bis 14c) mit zweiten Werkstücken (14d bis 14f) bestückbar ist, wobei die Bereiche durch Lageveränderung des Werkstücktisches (11) vertauschbar sind, ferner zwischen den Bereichen eine um eine parallel zur Oberfläche des Werkstücktisches (11) verlaufende erste Schwenkachse (20) selbsttätig schwenkbare Spritzschutzwand (17) angeordnet ist, die den von den Bereichen definierten Arbeitsraum (21, 22) für einen Spindelstock (15) der Werkzeugmaschine (10) bzw. einen Benutzer (42) asymmetrisch unterteilt, derart, daß auf der jeweiligen Bearbeitungsseite (13) ein größerer Arbeitsraum (21) vorhanden ist als auf der jeweiligen Bestückungsseite (19), dadurch gekennzeichnet, daß die Spritzschutzwand (17) mittels eines Mitnehmers (59) umklappbar ist, der am Spindelstock (15) angebracht ist und bei einer Relativbewegung von Spindelstock (15) und Werkstücktisch (11) in Richtung einer Längsachse des Werkstücktisches (11) an einer Kippanordnung (50 bis 58, 60 bis 62) der Spritzschutzwand (17) angreift.

3. Werkzeugmaschine nach einem oder beiden der Ansprüche 1 oder 2, dadurch gekennzeichnet, daß die Kippanordnung (50 bis 58, 60 bis 62) einen mit der Spritzschutzwand (17) verbundenen Kipphebel (54) aufweist, der um eine zur ersten Schwenkachse (20) parallele zweite Schwenkachse (53) schwenkbar ist und an einem freien Ende gabelartige Fortsätze (56) aufweist, die die Spritzschutzwand (17) beidseitig erfassen.

4. Werkzeugmaschine nach Anspruch 3, dadurch gekennzeichnet, daß die zweite Schwenkachse (53) oberhalb der ersten Schwenkachse (20) liegt und daß der Mitnehmer (59) unterhalb der zweiten Schwenkachse (53) am Kipphebel (54) angreift.

5. Werkzeugmaschine nach einem oder beiden der Ansprüche 3 oder 4, dadurch gekennzeichnet, daß eine Feder (60) in der zweiten Schwenkachse (53) am Kipphebel (54) und außerhalb der ersten Schwenkachse (20) an der Spritzschutzwand (17) angreift.

6. Werkzeugmaschine nach einem oder mehreren der Ansprüche 1 bis 5, dadurch gekennzeichnet, daß der Mitnehmer (59) an einer Nase (57, 57a) der Kippanordnung (50 bis 58, 60 bis 62) angreift, daß die Nase (57, 57a) schwenkbar angeordnet ist und unter Federkraft (63) an einer Betätigungsfläche (71) der Kippanordnung (50 bis 58, 60 bis 62) anliegt, derart, daß beim Angreifen des Mitnehmers (59) an der Nase (57, 57a) in einer Richtung die Spritzschutzwand (17) infolge einer Drehmomentübertragung über die Betätigungsfläche (71) umgeklappt wird, während beim Angreifen des Mitnehmers (59) an der Nase (57, 57a) in der entgegengesetzten Richtung die Nase (57, 57a) gegen die Federkraft (63) von der Betätigungsfläche (71) abgehoben wird und aus der Bewegungsbahn des Mitnehmers (59) wegschwenkt.

7. Werkzeugmaschine nach einem oder mehreren der Ansprüche 1 bis 6, dadurch gekennzeichnet, daß die Spritzschutzwand (17) eine um die erste Schwenkachse verschwenkbare Platte (30) sowie eine Abdeckung (35) umfaßt, die symmetrisch zu einer die erste Schwenkachse (20) enthaltenden Längsmittelebene (12) des Werkstücktisches (11) angeordnet ist und einen Bereich auf der Bestückungsseite (19) zwischen der Längsmittelebene (12) und der Platte (30) zu der vom Spindelstock (15) abgewandten Seite des Werkstücktisches (11) hin abdeckt.

8. Werkzeugmaschine nach Anspruch 7, dadurch gekennzeichnet, daß die Abdeckung (35) einen flexiblen Vorhang (32) umfaßt, der von einer vom Spindelstock (15) abgewandten Längskante (33) der Platte (30) zu einem in der Längsmittelebene (12) angeordneten, im wesentlichen vertikalen Schenkel (34) verläuft.

9. Werkzeugmaschine nach Anspruch 8, dadurch gekennzeichnet, daß der Vorhang (32) im Höhenabstand (d) von der ersten Schwenkachse (20) an der Längskante (33) angeordnet ist, und daß der Schenkel (34) im seitlichen Abstand vor dem Werkstücktisch (11) angeordnet ist und zum Werkstücktisch (11) hin in eine sich V-förmig erweiternde schräge Rinne (36) übergeht.

10. Werkzeugmaschine nach Anspruch 7, dadurch gekennzeichnet, daß die Abdeckung (35b) ein im Horizontalschnitt U-förmiges Wandteil (34b, 36b) umfaßt, das sich vom Werkstücktisch (11b) nach oben V-förmig aufweitet, derart, daß die Platte (30b) in ihren geklappten Endlagen innerhalb der vom Wandteil (34b, 36b) definierten Kontur verbleibt.

11. Werkzeugmaschine nach einem oder mehreren der Ansprüche 7 bis 10, dadurch gekennzeichnet, daß die Bearbeitungsseite (18) zu der vom Spindelstock (15) abgewandten Seite des Werkstücktisches (11) hin bis zur Abdeckung (35) mittels Schiebetüren (41) verschließbar ist.

12. Werkzeugmaschine nach einem oder mehreren der Ansprüche 1 bis 11, dadurch gekennzeichnet, daß die Spritzschutzwand (17) eine erste Platte (80) aufweist, die mit einem ersten Rand um die erste Schwenkachse (20a) schwenkbar ist, daß eine zweite Platte (81) um einen zum ersten Rand parallelen zweiten Rand der ersten Platte (80) schwenkbar ist, und daß eine Parallelogrammführung (20a, 80 bis 86) der Platten (80, 81)a vorgesehen ist, derart, daß in Umklapp-Endstellungen der Spritzschutzwand die erste Platte (80) geneigt und die zweite Platte (81) vertikal verläuft.

Fig.1

Fig.2

Fig.3

Fig.4

Fig.5

Fig.6

Fig.7

Fig. 8

Fig. 9

Fig. 10